# EUROPEAN PATENT APPLICATION

(11) **EP 1 531 448 A2**
(43) Date of publication of application: **18.05.2005**
(21) Application number: 04300775.6
(22) Date of filing: 09.11.2004
(51) Int. Cl.: G09F 3/03, F16B 41/00

(54) **Security sealing device**

(30) Priority: 11.11.2003 GB 0326255
(71) Applicant: Actaris UK Limited, Felixstowe, Suffolk IP11 2ER (GB)
(72) Inventor: Bond, William, IP11 9HG, Felixstowe (GB); Dickerson, Adrian, IP11 2UJ, Felixstowe (GB)
(74) Representative: Feray, Valérie

(57) **Abstract**

The present invention relates to the field of security sealing device and is particularly concerned with methods of protecting a meter, such as an electricity supply meter, from being opened for the purpose of tampering with the meter mechanism or fraudulently abstracting the electricity (or other utility being supplied). Said security sealing device 10 comprises a first part 20 forming a screw in order to secure together two members, said first part 20 having a rigid elongate element 50 to be fitted into a bore in each of the two members to be secured together and a head 40 comprising means for effecting rotation of the screw by a tool such as a screwdriver. It further comprises a second part 30 separated from said first part 20, said second part 30 including a recess 92 for receiving said head 40 and a lateral outer wall 80 having at least two openings 90 facing each other.

## Description

The present invention relates to the field of security sealing device and is particularly concerned with methods of protecting a meter, such as an electricity supply meter, from being opened for the purpose of tampering with the meter mechanism or fraudulently abstracting the electricity (or other utility being supplied).

The majority of instruments, meters or apparatus which incorporate a recording, measuring or indicating mechanism within a chamber to which access cannot normally be gained have a housing formed in at least two parts, such as a cover and a base, which must be maintained in a secure relationship.

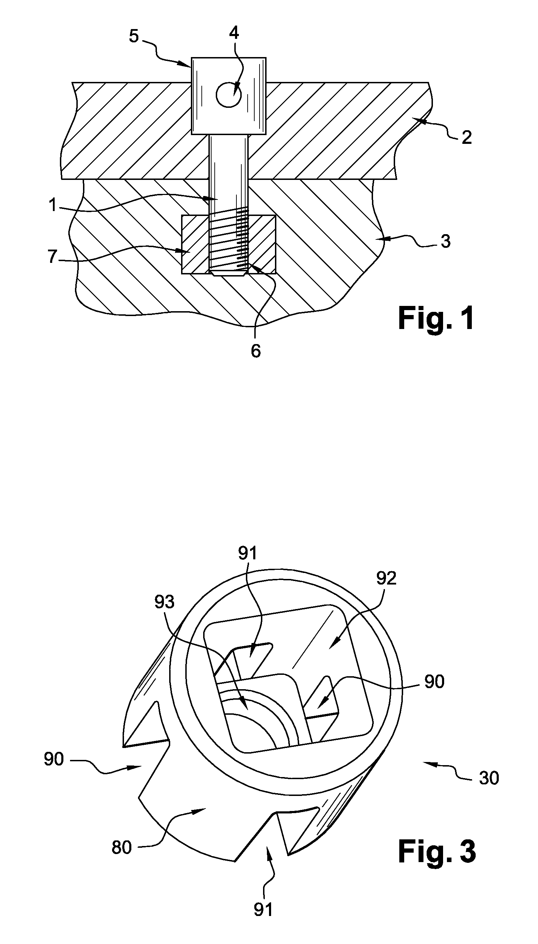

A known solution to this problem of protecting electricity meter against illegal entry to the meter mechanism consists of the use of a threaded screw, a threaded insert plus a sealing wire and sealing ferrule. The meter cover is conventionally fixed to the meter based by two threaded screws. Figure 1 illustrates such a screw 1 allowing to secure a meter cover 2 to a meter base 3. Said screw 1 has holes 4 crossed drilled through its head 5. The screw extends through a hole in the meter cover and then through a hole in the meter base, said hole in the meter base extending to a cavity 6. The screw 1 is screwed into a threaded insert 7 located in the cavity 6. Once the screw has been inserted, it is then prevented from being removed by of a special sealing wire and sealing ferrule. After the screw 1 has been tightened, during assembly of the meter cover 2 to the base 3, the sealing wire (not shown) is passed through the slot in the cover and the holes 4 in the screw head 5 and the two ends of the wire are passed through the ferrule (not shown). The ferrule is then crimped onto the cable using a special sealing tool. The screw 1 cannot then be removed and the cover 2 cannot be separated from the base 3 without breaking the sealing wire and/or ferrule.

However, this solution raises some difficult problems. The conventional sealing screw 1 as represented in figure 1 is both difficult and expensive to produce because of the need for the cross drilled holes.

One object of the present invention is to provide a security sealing device that is cheaper and easier to manufacture than sealing screw with cross-drilled head whilst still allowing conventional sealing wires and ferrules to be used.

More precisely, the present invention provides a security sealing device comprising a first part forming a screw in order to secure together two members, said first part having:
- a rigid elongate element to be fitted into a bore in each of the two members to be secured together,
- a head comprising means for effecting rotation of the screw by a tool such as a screwdriver,
said security sealing device being characterized in that it further comprises a second part separated from said first part, said second part including:
- a recess with a shape adapted for receiving said head, in order that said first and second parts can only rotate together,
- a lateral outer wall having at least two holes facing each other,
said first part being inserted in said second part by locating said head in said recess.

Thus, by use of this security sealing device, the cross-drilled threaded screw is replaced by a first part that is a standard screw and a separate second part acting as a security seal part. Said specifically designed security seal part with an identically shaped recess for the screw head is then fitted onto the screw. The two parts are keyed together by the combination of the special shaped recess adapted for receiving the screw head The security seal part contains cross-holes which allows the cover and the base of a meter to be secured using standard sealing wire and ferrule.

Said standard screw can be produced using standard, fast and fully automated manufacturing processes, thereby producing screw at a fraction of the cost of threaded sealing screw of the prior art.

Said security seal part can also be produced in plastic or metal using very cheap manufacturing processes such as injection moulding or diecasting. The combined cost of the two parts is still a fraction of the machined threaded sealing screw of the prior art.

Advantageously, said screw is a thread cutting screw.

It is indeed a problem to provide a threaded insert to be fitted in the cavity of the meter base in order to provide somewhere for the screw to be screwed. The insert and its fitting are expensive. Therefore, a threaded screw may be advantageously replaced by a thread cutting screw (called also self tapping screw). By using a thread forming screw, the screw may be inserted directly into one of the cover or base, without the need for a threaded insert. This reduces the cost further by eliminating both the cost of the insert and its assembly cost to fit into one of the cover or base.

Advantageously,
- said recess is a first inner chamber with dimensions adapted to receive said head,
- said second part further comprises a second inner chamber located below said first inner chamber and having dimensions smaller than said head and adapted to receive said rigid elongate element.

Advantageously, said head is a square head and said first inner chamber has substantially a shape of right-angled parallelepiped.

Advantageously, said second inner chamber is a substantial cylinder with a diameter that is greater than the diameter of said rigid elongate element.

Advantageously, said lateral outer wall has a substantially cylindrical shape.

Advantageously, said lateral outer wall comprises two pairs of openings, both openings of each pair facing each other.

Advantageously, said second part is made of plastic.

The present invention has also for object a method of securing together two members by using a security sealing device according to the invention, said method comprising the following steps:
- keying said first part to said second part by inserting said head into said recess so that said first and second parts can only rotate together,
- securing together said two members by screwing said security sealing device,
- passing a sealing wire through said two openings facing each other of said lateral outer wall,
- joining together the two ends of said sealing wire by using means for joining such as a ferrule.

Other characteristics and advantages of the invention will appear reading the following description of an embodiment of the invention, given by way of example and with reference to the accompanying drawings, in which:
- Figure 1 shows schematically a sealing design according to the prior art,
- Figure 2 shows an exploded three-dimensional view of a security sealing device according to the present invention,
- Figure 3 shows another three-dimensional view of the second part of the security sealing device shown in figure 2.

Figure 1 has already been described by reference to the prior art.

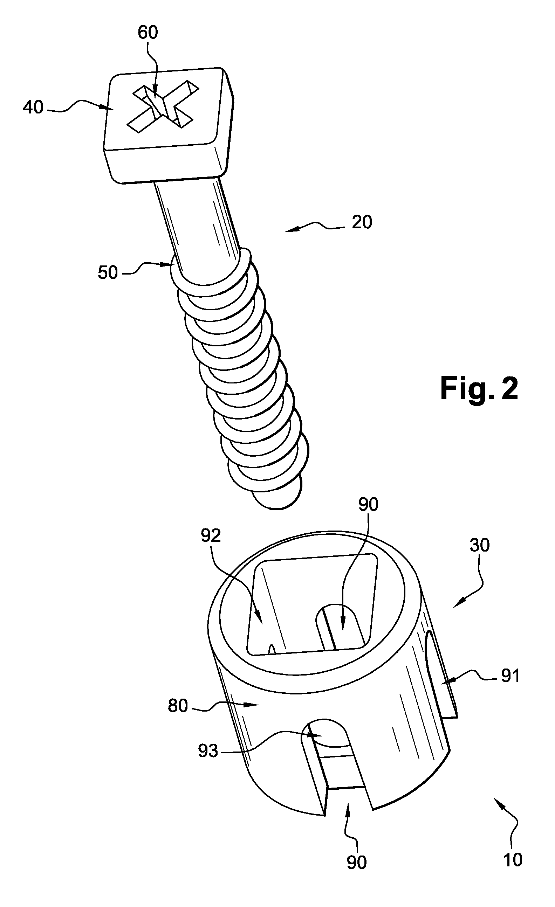

Figure 2 shows a security sealing device 10 according to the invention in an exploded view.

Said security sealing device 10 comprises:
- a first part forming a screw 20,
- a second part 30.

The screw 20 comprises:
- a square head 40,
- a rigid elongate element 50.

Said screw 20 is a thread forming (called also self tapping) screw, that is a screw that may be driven into an untapped hole and which forms a thread in the material defining the hole as it is driven.

Such a screw 20 can be produced using conventional, fast and fully automated manufacturing processes, such as cold heading and thread rolling.

One has to note that such a screw is a standard threading screw that has of course no holes crossed drilled through its head.

The screw head 40 has two crossing slots 60 therein for effecting rotation of the screw 20 by a screwdriver or other tool.

Figure 3 shows another three-dimensional view of the second part 30.

The second part 30 comprises:
- a lateral outer wall 80,
- a recess 92 being a first inner chamber,
- a second inner chamber 93 located below said first inner chamber 92.

The first inner chamber 92 has substantially a shape of right-angled parallelepiped.

The second inner chamber 93 is a substantial cylinder with a diameter that is greater than the diameter of said rigid elongate element but that blocks the passage of the screw head 40.

The lateral outer wall 80 has two pairs 90 and 91 of openings, both openings of each pair 90 or 91 facing each other; in other words, said second part has holes crossed drilled through its outer wall. Said openings or holes are substantially reverse U-shaped.

The second part 30 can be produced in plastic or metal using very cheap manufacturing processes such as injection moulding or diecasting.

The combined cost of the two parts 20 and 30 is still a fraction of a cross-drilled machined screws plus a threaded insert according to the prior art.

In order to secure two members such as a base and a cover of a meter, the two parts 20 and 30 are keyed together by firstly inserting the a rigid elongate element 50 through the second inner chamber 93 and secondly inserting the screw head 40 into the recess 92; The recess 92 and the screw head 40 having the same square shape, said first and second parts can only rotate together.

By using a thread-forming type screw 20, the screw may be inserted directly into one of the meter cover and base to be secured without the need for a threaded insert. This reduces the cost further by eliminating both the cost of the insert and its assembly cost to fit into one of the cover or base.

After the screw 20 has been tightened, during assembly of the meter cover to the base, the sealing wire is passed through the slot in the cover and the holes 90 (or 91) in the second part 30 and the two ends of the wire are passed through the ferrule. The ferrule is then crimped onto the cable using a special sealing tool. Because, said first and second parts 20 and 30 can only rotate together, the screw 20 cannot be removed and the cover cannot be separated from the base without breaking the sealing wire and/or the ferrule.

The proposed design provides a cheaper and more efficient method of both fixing and sealing utility meters, whilst still allowing conventional sealing wires & ferrules to be used.

Naturally, the present invention is not limited to the example and embodiment described and shown, and the invention can be the subject to numerous variants that are available to the person skilled in the art.

For instance, the screw head has been described as having a square shape but it may also be a multi sided shaped head, the shape of the recess being adapted consequently.

## Claims

1. Security sealing device (10) comprising a first part (20) forming a screw in order to secure together two members, said first part (20) having:
- a rigid elongate element (50) to be fitted into a bore in each of the two members to be secured together,
- a head (40) comprising means for effecting rotation of the screw by a tool such as a screwdriver,
said security sealing device (10) being **characterized in that** it further comprises a second part (30) separated from said first part (20), said second part (30) including:
- a recess (92) for receiving said head (40), in order that said first and second parts can only rotate together,
- a lateral outer wall (80) having at least two openings (90, 91) facing each other.

2. Security sealing device (10) according to claim 1 wherein said screw (20) is a thread cutting screw.

3. Security sealing device (10) according to any one of claims 1 or 2 **characterized in that**:
- said recess (92) is a first inner chamber with dimensions adapted to receive said head (40),
- said second part (30) further comprises a second inner chamber (93) located below said first inner chamber (92) and having dimensions smaller than said head (40) and adapted to receive said rigid elongate element (50).

4. Security sealing device (10) according to claim 3 wherein said head (40) is a square head and said first inner chamber (92) has substantially a shape of right-angled parallelepiped.

5. Security sealing device (10) according to claim 3 or claim 4 wherein said second inner chamber (93) is a substantial cylinder with a diameter that is greater than the diameter of said rigid elongate element (50).

6. Security sealing device (10) according to any one of the preceding claims wherein said lateral outer wall (80) has a substantially cylindrical shape.

7. Security sealing device (10) according to any one of the preceding claims wherein said lateral outer wall (80) comprises two pairs (90, 91) of openings, both openings of each pair facing each other.

8. Security sealing device (10) according to any one of the preceding claims wherein said second part (30) is made of plastic.

9. Method of securing together two members by using a security sealing device according to anyone of the preceding claims, said method comprising the following steps:
- keying said first part to said second part by inserting said head into said recess so that said first and second parts can only rotate together,
- securing together said two members by screwing said security sealing device,
- passing a sealing wire through said two openings facing each other of said lateral outer wall,
- joining together the two ends of said sealing wire by using means for joining such as a ferrule.
